# FASCICULE DE BREVET EUROPEEN

(11) **EP 1 236 855 B1**
(45) Date de publication et mention de la délivrance du brevet: **07.06.2006**
(21) Numéro de dépôt: 02290468.4
(22) Date de dépôt: 26.02.2002
(51) Int. Cl.: E05G 1/14, G08B 13/14

(54) **Dispositif de contrôle-commande en vue de la surveillance de la neutralisation et/ou la destruction de valeurs, de documents et/ou d'objets.**
Regel- und Steuervorrichtung zur Überwachung, zur Neutralisation und/oder zur Vernichtung von Wertsachen, Dokumenten und/oder Gegenständen
Control and command device for monitoring, neutralizing and/or destruction of valuables, documents and/or objects

(30) Priorité: 28.02.2001 FR 0102750
(43) Date de publication de la demande: 04.09.2002
(73) Titulaire: BRINK'S FRANCE, 75009 Paris (FR)
(72) Inventeur: Besnard, Philippe, 45210 Griselles (FR)
(74) Mandataire: Jacobson, Claude

(56) Documents cités:
- WO-A-99/58799
- GB-A- 2 218 553
- US-A- 5 388 433

## Description

La présente invention est relative aux dispositifs de sécurité applicables notamment au transport de fonds, d'objets et de documents précieux ou confidentiels ou encore à la surveillance d'objets de valeur.

Parmi les dispositifs de sécurité pour le transport de fonds on connaît des valises sécurisées comportant des moyens de neutralisation des documents ou billets de banque qu'elles contiennent, par dispersion d'encre rendant notamment les billets inutilisables.

Les moyens de neutralisation précités comportent par exemple un système de déclenchement pyrotechnique en cas de tentative d'effraction, ledit système de déclenchement étant paramétrable.

Cependant une valise sécurisée présente l'inconvénient de contenir un nombre limité de billets en comparaison avec le volume important d'encre qu'elle doit contenir pour assurer la neutralisation de ces billets.

Par ailleurs l'utilisation de valises sécurisées nécessite souvent d'aménager les véhicules de transport en prévoyant dans un véhicule des casiers de réception des valises et de munir ces casiers de moyens de détection du retrait de chaque valise hors de son casier, comme cela est décrit dans WO 99/58799.

De tels aménagements sont complexes et coûteux.

L'invention vise à pallier les inconvénients de la technique existante en créant un dispositif de contrôle-commande assurant la commande de neutralisation et/ou de destruction de billets de banque ou de documents lors de leur transport notamment dans des véhicules blindés en utilisant les technologies des Radio-Fréquences.

L'invention vise également à créer un tel dispositif de contrôle-commande permettant d'assurer la surveillance de documents confidentiels ou objets sur leur lieu de stockage.

Elle a donc pour objet un dispositif de contrôle-commande en vue de la surveillance, de la neutralisation et/ou de la destruction de valeurs, de documents et/ou d'objets conforme à la revendication 1.

D'autre caractéristique de l'invention apparaissent dans les revendications dépendantes.

L'invention sera mieux comprise à la lecture de la description qui va suivre, faite en référence aux dessins annexés, donnés uniquement à titre d'exemple ei sur lesquels:
- la figure 1 est un schéma synoptique du dispositif de contrôle-commande suivant l'invention;
- la figure 2 est une vue schématique du dispositif cible faisant partie du dispositif de contrôle-commande suivant l'invention; et
- la figure 3 est un schéma montrant le fonctionnement du dispositif de contrôle- commande suivant l'invention.

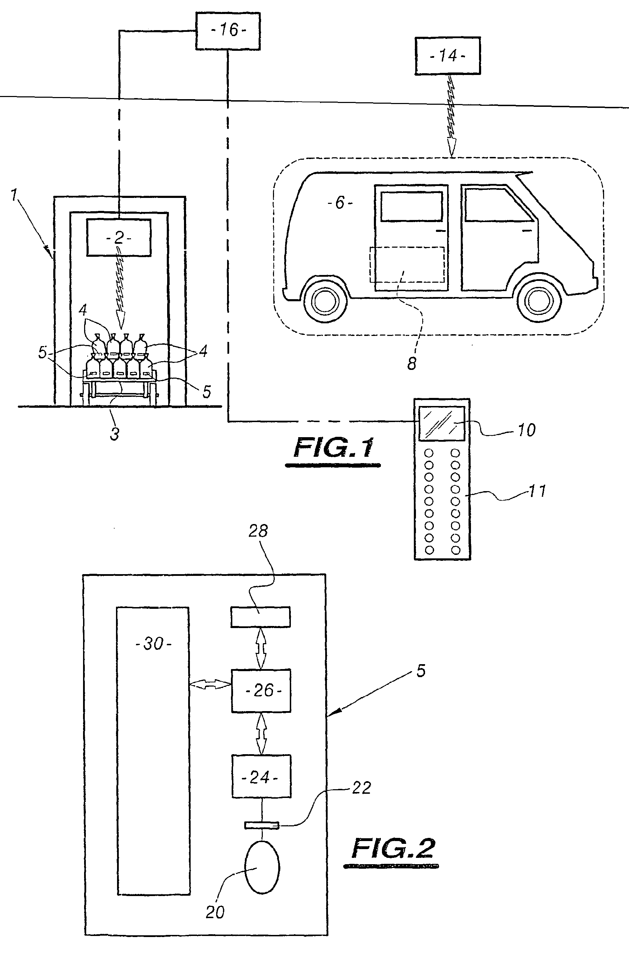

Le dispositif de contrôle-commande représenté à la figure 1 est destiné par exempte à assurer la surveillance du transport de billets de banque ou autres valeurs, tout en permettant leur neutralisation et/ou leur destruction à distance en utilisant la transmission d'informations par Radio-Fréquence .

Le dispositif de commande et de contrôle par Radio-Fréquence représenté à la figure 1 comporte plusieurs bases émettrices de signaux Radio-Fréquence.

Une première base émettrice comporte un appareil de contrôle sous la forme d'un portique 1 équipé d'un émetteur-récepteur de signaux Radio-Fréquence 2 et sous iequet sont destinés à être déplacés par exemple des chariots 3 transportant des sacs 4 de billets de banque et auxquels sont associés des dispositifs cibles tels que le dispositif 5 qui sera décrit plus en détail en référence à la figure 2.

Le dispositif de contrôle-commande comporte en outre des véhicules blindés de transport tels que le véhicule 6. Chacun des véhicules est équipé d'un émetteur-récepteur de signaux Radio-Fréquence 8. En outre, à chaque point de livraison ou d'enlèvement desservi par les véhicules blindés 6 est prévu un émetteur-récepteur de signaux Radio-Fréquence 10 analogue aux émetteurs 2 et 8 et contenu soit dans un portique analogue au portique 1 soit dans un appareil de contrôle portable 11.

Les émetteurs-récepteurs 2, 8 et 10 sont avantageusement identiques.

Le portique 1 se trouve généralement dans les locaux d'une banque ou encore d'une entreprise de transport de fonds.

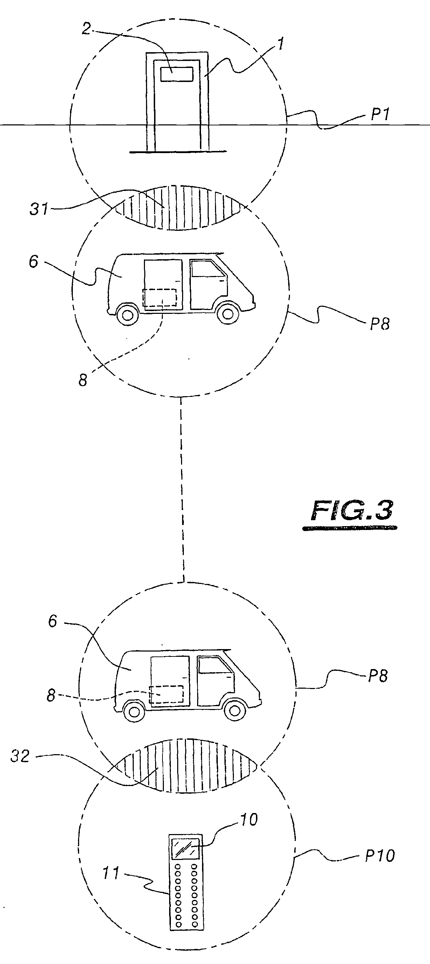

Comme représenté à la figure 3, l'émetteur de l'émetteur-récepteur 2 définit un périmètre de sécurité Pique les dispositifs cibles 5 et par conséquent les sacs 4 de billets de banque auxquels ils ont associés ne doivent pas franchir.

De même l'émetteur-récepteur 8 du véhicule blindé 6 définit un périmètre de sécurité P8 comprenant le volume du véhicule 6 lui-même ainsi q'une zone permettant le chargement et le déchargement de celui-ci dans un périmètre de sécurité tel que le périmètre P1 défini par le portique 1.

L'émetteur-récepteur 10 de l'appareil de contrôle portable 11 qui peut d'ailleurs être également incorporé à un portique analogue au portique 1 est disposé dans les locaux d'une entreprise telle qu'une société commerciale ou une banque qui doit recevoir ou expédier des billets de banque ou autres valeurs. Son émetteur-récepteur définit un périmètre de sécurité P10. L'émetteur-récepteur 10 de l'appareil portable 11 et l'émetteur-récepteur 2 du portique 1 sont en outre associés à des moyens (non représentés) de désactivation des dispositifs cibles 5.

Le rôle du portique 1 et de l'appareil de contrôle 11 peut d'ailleurs être assuré par un seul et même portique ou appareil portable

Le dispositif de contrôle-commande suivant l'invention comporte en outre un central de télésurveillance 14 pourvu d'un émetteur-récepteur destiné à recevoir par exemple des signaux d'alarme en provenance d'un véhicule tel que le véhicule 6 en cas d'agression et à émettre vers les dispositifs cibles 5 se trouvant dans le véhicule 6 subissant une agression des signaux d'actionnement en vue de la neutralisation ou de la destruction des billets de banque transportés par le véhicule et auxquels sont associés les dispositifs cibles 5.

Les sacs contenant les dispositifs cibles 5 peuvent être stockés dans une limite de 5 à 50 mètres de l'un quelconque des émetteurs Radio-Fréquence 2,8 et 10 définissant les périmètres de sécurité ou zones protégées P1 P8 et P10 définies plus haut et délimitant une aire fonctionnelle de sécurité qui est déterminée en fonction de la structure géographique des lieux de chargement et de déchargement des valeurs. Cette distance dont la limite inférieure est de 5 mètres contribue à déterminer la technologie d'identification Radio-Fréquence qui pourra être utilisée. Des fréquences de 900 MHz, de 2,45 MHz ou toute autre fréquence ultérieurement agréée par l'autorité de réglementation de télécommunication pourront être adoptées.

Enfin le dispositif de contrôle-commande selon l'invention est relié à une installation de comptabilité centrale 16 ou bien à un système de gestion intégrée d'entreprise par exemple du type SAP R3.

Sur la figure 2 on a représenté schématiquement un dispositif cible tel que les dispositifs cibles 5 de la figure 1.

Ce dispositif cible comporte une antenne 20 associée à une puce électronique 22 à Radio-Fréquence ou micro-composant qui peut être soit de technologie à mémoire, soit de technologie à microprocesseur, destinée notamment à stocker une étiquette électronique d'identification Radio-Fréquence de la cible 5 ainsi que des valeurs aux quelles elle est associée.

L'antenne 20 est reliée par l'intermédiaire de la puce 22 et d'un coupleur Radio-Fréquence 24, à un système microprogrammé 26 alimenté par une pile ou une batterie 28 et relié à un dispositif d'intervention 30 par projection d'une encre de neutralisation des billets de banque ou d'un produit chimique de destruction de ces billets sous la commande du système microprogrammé 26. Les fréquences de fonctionnement du coupleur de fréquence 24 sont conformes à la réglementation en vigueur.

Chaque dispositif cible 5 est un dispositif qui se trouve avant utilisation en mode de veille totale c'est à dire ne consommant quasiment aucune énergie. Le passage en mode actif de ce dispositif est déclenché lors de l'exposition au rayonnement électromagnétique d'un émetteur tel que l'émetteur-récepteur 2 contenu dans le portique 1.

Comme représenté à la figure 3, l'émetteur de l'émetteur-récepteur 2 du portique 1 définit un périmètre de sécurité P1.

On suppose que le dispositif cible 5 soit contenu dans un sac 4 de billets de banque à transporter.

Comme représenté à la figure 1 le sac 4 contenant le dispositif cible 5 passe avec un grand nombre d'autres sacs analogues munis chacun de leur dispositif cible, sous le portique 1 devant l'émetteur-récepteur 2 qui émet un signal d'activation de tous les dispositifs cibles 5 qui traversent le portique 1.

Chacun des dispositifs cibles tels que le dispositif 5 passe alors du mode de veille en mode actif et reçoit périodiquement un signal d'activation en provenance de l'émetteur 2.

Lors du passage sous le portique 1, des sacs auxquels sont associés les dispositifs cibles 5, les montants des valeurs transportées dans chacun des sacs sont téléchargés dans chaque dispositif cible 5. Chacun de ces montants qui a été préalablement saisi par un micro-ordinateur non représenté, associé au portique 1 à partir par exemple du dispositif 16 de comptabilité centrale, permet d'assurer la traçabilité comptable des valeurs transportées mais n'a aucun objectif de sécurité.

Simultanément le véhicule 6 chargé de transporter les billets dont les dispositifs cibles 5 ont été rendus actifs reçoit par radio, par exemple du central de télésurveillance 14 une information relative à l'identité des sacs en cours de chargement et éventuellement à la valeur de leur contenu. Le véhicule 6 est placé par son conducteur de manière que ses portes de chargement se trouvent à l'intérieur du périmètre de sécurité P1 défini par l'émetteur-récepteur 2 du portique 1. L'émetteur-récepteur 8 du véhicule blindé 6 définit alors le périmètre de sécurité P8 autour du véhicule, à l'intérieur duquel il émet régulièrement toutes les n secondes, des messages à l'intention des dispositifs cibles tels que le dispositif 5 qui vont se trouver dans son périmètre de sécurité P8 c'est à dire qui vont être chargés dans les véhicules, afin de maintenir ces dispositifs cibles à l'état actif.

Les périmètres P1 et P8 définissent au moment des opérations de transfert des sacs de billets entre les locaux de la banque ou de l'entreprise de transport et le véhicule blindé 6 une zone d'intersection 31 permettant le transport des sacs par des manutentionnaires.

La technologie actuelle de gestion de l'anti-collision des applications de Radio-Fréquence permet de lire l'identité et la valeur de plusieurs dizaines de sacs par seconde lors du passage sous un portique et pendant toute la durée du transport des sacs dans le véhicule blindé 6. Le dispositif cible 5 correspondant à chacun des sacs reste en mode actif. Le coupleur Radio-Fréquence 24 de chaque dispositif cible 5 est interrogé en permanence par l'émetteur-récepteur 8 du véhicule blindé 6. Le système d'identification 8 Radio-Fréquence du véhicule blindé 6 émet un signal de validation toutes les 5 à 10 secondes par exemple permettant de maintenir chaque dispositif cible 5 en mode actif selon le principe de l'homme mort utilisé dans la protection du travailleur isolé.

L'émetteur-récepteur 8 du véhicule blindé 6 lit toutes les étiquette électroniques Radio-Fréquence enregistrées dans les puces électroniques 22 des dispositifs cibles 5 correspondants et enregistre leur présence ainsi que le contenu des valeurs s'il a été saisi par le client ou l'opérateur et/ou directement par le système comptable dans l'étiquette électronique Radio-Fréquence contenue dans la puce 22.

Cet émetteur-récepteur valide les données quantitatives telles que le nombre de sacs et qualitatives telles que le montant des valeurs contenues dans chaque sac.

Ainsi qu'on l'a vu précédemment, le dispositif cible 5 associé à chaque sac 4 est maintenu en mode actif pendant toute la durée du transfert des sacs qui sont maintenus dans le champs ou périmètre de sécurité P1 du portique 1 et/ou dans le champs ou périmètre de sécurité P8 de l'émetteur-récepteur du véhicule blindé 6 et enfin, à l'arrivée du véhicule 6 à sa destination, dans le périmètre de sécurité P10 de l'émetteur-récepteur 10 du dispositif portable.

A la fin du trajet de transport des billets de banque par le véhicule blindé 6, celui-ci parvient à un lieu de livraison dont l'emplacement est marqué par la présence du dispositif émetteur-récepteur 10 de l'appareil portable 11 tenu à la main par un employé de l'entreprise à livrer et définissant le périmètre de sécurité P10 dont l'intersection avec le périmètre de sécurité P8 de l'émetteur 8 du véhicule blindé 6 délimite une zone 32 dans laquelle le transfert des sacs du véhicule blindé 6 vers le local de réception des sacs de billets de banque peut être assuré avec un maximum de sécurité. Les sacs contenant les dispositifs cibles 5 sont lus par un employé du transporteur de fonds à l'aide du terminal portable 11 contenant l'émetteur 10. Ils peuvent également être disposés sur un support comportant un émetteur-récepteur tel que l'émetteur-récepteur 10.

Ce terminal assure alors la lecture du montant des valeurs contenues dans le sac par reconnaissance du code électromagnétique contenu dans la puce électronique 22 du dispositif cible 5 pour vérifier la valeur du contenu de chaque sac et pour assurer la traçabilité comptable des valeurs, et désactive alors le dispositif cible 5 correspondant qui revient en mode de veille.

Si au cours des diverses manutentions des sacs contenant les dispositifs cibles 5, un sac vient à quitter l'un des périmètres de sécurité P1, P8 ou P10 son antenne 20 ne recevant plus de signal d'activation périodique provoque le déclenchement, par le système microprogrammé 26, du dispositif 30 de neutralisation ou de destruction des billets de banque contenus dans le sac correspondant.

En outre le transporteur de fonds, qui est représenté soit par le central de télésurveillance 14 de cette entreprise soit par le conducteur du véhicule blindé de transport 6, à la possibilité en cas de tentative d'agression, de commander le déclenchement des dispositifs de cibles 5 associés aux sacs 4 de billets de banque se trouvant à bord du véhicule blindé 6 pour qu'ils assurent le processus de neutralisation et/ou de destruction des valeurs par une action en mode positif ou négatif depuis le véhicule blindé.

Le mode de déclenchement en mode positif est déterminé par l'automaticité de l'occurrence du déclenchement du processus si aucune dérogation à l'action en cours n'est générée au cours d'un temps T paramétrable.

Le mode de déclenchement négatif est déterminé par une action volontaire d'un processus extérieur ou d'un individu sur le système de contrôle-commande.

De façon avantageuse, le déclenchement des dispositifs cibles 5 associés aux sacs 4 transportés dans le véhicule blindé 6 est assuré par le central de télésurveillance 14 sur réception de la part d'un membre de l'équipe du véhicule blindé 6 d'une information relative à une agression imminente ou en cours d'exécution.

Si au cours du transfert l'un des sacs contenant un dispositif cible 5 en mode actif est retiré du périmètre de sécurité P1 défini par l'émetteur-récepteur 2 du portique 1 ou du périmètre de sécurité P8 défini par l'émetteur-récepteur 8 du véhicule blindé 6 ou encore du périmètre de sécurité P10 de l'émetteur-récepteur 10 du centre de réception, le dispositif cible ne recevant plus de signaux d'activation de l'un des émetteurs 2, 8, 10, passe du mode actif en mode déclenché au terme d'un temps prédéterminé de n secondes, n étant paramétrable. Le mode déclenché est géré automatiquement par un programme contenu dans le système microprogrammé 26 du dispositif cible 5 qui ne recevant plus d'informations venant du coupleur Radio-Fréquence 24, celui-ci ne recevant lui-même plus d'informations de quelque émetteur Radio-Fréquence que ce soit et ce pendant un temps paramétrable t, provoque le déclenchement du dispositif 30 de neutralisation ou de destruction des billets contenus dans le sac correspondant.

Le dispositif de contrôle-commande qui vient d'être décrit est appliqué à la surveillance et à la neutralisation ou à la destruction de billets de banque ou d'autres valeurs pendant leur chargement, leur transport et leur déchargement.

On comprendra aisément que ce dispositif peut être également appliqué à la surveillance de documents rares ou d'objets précieux auquel cas, au lieu de commander leur neutralisation par projection d'encre ou leur destruction, les dispositifs cibles déclenchent des dispositifs d'alarme ou éventuellement le blocage d'issues des locaux contenant les objets dès le franchissement par les objets et leurs dispositifs cibles associés du périmètre de sécurité établi par l'appareil de contrôle émettant les signaux de validation vers les dispositifs cibles.

Le dispositif de contrôle-commande fait appel à une technologie disponible dans le commerce . On donne ci-après la liste des composants entrant dans la construction du dispositif ainsi que quelques exemples de constructeurs de ces composants.

| Composant | Fabricant |
|---|---|
| ■ Emetteur-récepteur 2, 8, 10 | EM Marin |
| | Gemplus |
| | Motorola |
| | Oberthur Card Syst. |
| | Phillips - Mikron |
| | Schlumberger |
| | ST microelectronics ST microelectronics |
| ■ Dispositif cible 5 | |
| | |
| ➢ *Antenne 20* et *microcomposant 22* | EM Marin |
| | Gemplus |
| | Motorola |
| | Oberthur Card Syst. |
| | Phillips - Mikron |
| | Schlumberger |
| | ST microelectronics |
| | |
| ➢ *coupleur de Radio-fréquence 24* | |
| | EM Marin |
| | Gemplus |
| | Motorola |
| | Oberthur Card Syst. |
| | Phillips - Mikron |
| | Schlumberger |
| | ST microelectronics |
| | |
| ➢ *système microprogrammé 26* | Ampro Computers,Inc |
| | Hitex GmbH |
| | Real Time Devices USA |
| | WinSystems, Inc. |
| ■ Central de télésurveillance 14 | Brink's |
| | CCTG |
| | CET Protection One |
| | Delta-protection |
| | Euroguard |

## Revendications

1. Dispositif de contrôle-commande en vue de la surveillance, de la neutralisation et/ou la destruction de valeurs, de documents et/ou d'objets, comportant au moins un dispositif cible (5) destiné à être placé à proximité immédiate de valeurs, d'au moins un document ou d'un objet à surveiller, à neutraliser et/ou à détruire, **caractérisé en ce qu'**il comporte au moins un émetteur (2, 8, 10) par voie hertzienne de signaux contenant des informations relatives d'une part au dispositif cible (5) et d'autre part aux valeurs, au document ou à l'objet à proximité desquelles ou duquel il est placé, le dispositif cible (5) comprenant :
- une antenne (20) de réception des signaux provenant dudit émetteur (2, 8, 10),
- des moyens (26) reliés à ladite antenne pour reconnaître dans les signaux dudit émetteur les informations concernant au moins le dispositif cible (5) placé à proximité des valeurs, du document et/ou l'objet,
- des moyens (26) de détection d'une anomalie dans lesdits signaux et de commande de moyens (30) d'intervention en vue de signaler un incident dans la surveillance de l'objet ou de procéder à la neutralisation et/ou à la destruction des valeurs ou dudit au moins un document,
- un dispositif (22) de stockage d'une étiquette électronique d'identification du dispositif cible (5) et des valeurs, du document ou de l'objet à proximité desquelles ou duquel il est placé, et
- **en ce qu'**il comporte en outre des moyens associés audit émetteur-récepteur (2) pour transmettre au dispositif (22) de stockage d'étiquette électronique de chaque dispositif cible (5) des données d'identification du dispositif cible (5) et des valeurs, du document ou de l'objet auquel le dispositif cible est associé.

2. Dispositif de contrôle suivant la revendication 1, **caractérisé en ce** ledit émetteur (2, 8, 10) a une portée définissant un périmètre de sécurité prédéterminé (P1, P8, P10) et, les moyens (26) de détection d'anomalies sont des moyens de détection de la sortie du dispositif cible (5) hors du périmètre de sécurité dudit émetteur (2, 8, 10) par absence de réception du signal dudit émetteur.

3. Dispositif de contrôle-commande suivant la revendication 1, **caractérisé en ce que** les signaux provenant dudit émetteur (2, 8, 10) reçus par le dispositif cible ont une cadence de répétition prédéterminée et, les moyens (26) de détection d'anomalies comportent en outre des moyens de détection de signaux reçus hors de ladite cadence de répétition.

4. Dispositif de contrôle-commande suivant l'une des revendications 1 à 3, **caractérisé en ce que** lesdits moyens de détection d'anomalies comportent un système microprogrammé (26) relié à ladite antenne (20) par un coupleur de Radio-Fréquence (24).

5. Dispositif de contrôle-commande suivant l'une des revendication 1 à 4 **caractérisé en ce qu'**il comporte dans les locaux d'au moins une entreprise de gestion ou de transport de fonds un appareil de contrôle de sacs (4), de valeurs à transporter auxquelles sont associés des dispositifs cibles (5), ledit appareil de contrôle comprenant un émetteur-récepteur (2 ; 10) de signaux Radio-Fréquence d'activation des dispositifs cibles (5) dans un périmètre de sécurité (P1 ; P10) prédéterminé défini par l'émetteur de l'émetteur-récepteur (2 ; 10) dudit appareil de contrôle et les dispositifs cibles (5) comportent chacun des moyens (26) de détection de l'absence des signaux d'activation du fait de la sortie des dispositifs cibles hors du périmètre de sécurité (P1 ; P10) de l'appareil de contrôle (1 ; 11) et de commande des moyens d'intervention (30) en vue de la neutralisation et/ou de la destruction des valeurs contenues dans lesdits sacs (4).

6. Dispositif de contrôle- commande suivant la revendication 5, **caractérisé en ce qu'**il est relié à un système de comptabilité centrale (16) ou à un système de gestion intégrée d'entreprise pour en recevoir dudit système des informations relatives à l'identification des dispositifs cibles (5) et aux valeurs contenues dans les sacs auxquels ils sont associés.

7. Dispositif de contrôle-commande suivant l'une des revendications 1 à 6, **caractérisé en ce qu'**il comporte en outre au moins un véhicule de transport de fonds (6) destiné à recevoir les sacs (4) de valeurs à transporter auxquelles sont associés des dispositifs cibles (5), ledit véhicule (6) comprenant un émetteur-récepteur (8) de signaux Radio-Fréquence d'activation des dispositifs cibles (5) dans un périmètre de sécurité (P8) prédéterminé défini par l'émetteur-récepteur (8) dudit véhicule, les moyens (26) de détection de l'absence des signaux d'activation et de commande des moyens d'intervention (30) de chacun des dispositifs cibles (5) réagissant à la sortie des dispositifs cibles hors du périmètre de sécurité (P8) du véhicule (6) pour commander les moyens d'intervention (30) pour la neutralisation et/ou destructions des valeurs contenues dans lesdits sacs.

8. Dispositif de contrôle-commande suivant la revendication 7, **caractérisé en ce que** l'émetteur-récepteur (8) dudit au moins un véhicule est en liaison avec un central de télésurveillance (14) pourvu d'un émetteur-récepteur destiné à recevoir des signaux d'alarme en provenance du véhicule (6) en cas d'agression et à émettre en réponse audits signaux d'alarme vers les dispositifs cibles (5) se trouvant dans le véhicule (6), des signaux d'actionnement hors de la cadence de répétition des signaux d'activation des dispositifs cibles (5) pour permettre aux moyens (26) de détection d'anomalies de commander lesdits moyens d'intervention (30) en vue de la neutralisation et/ou de la destruction des valeurs contenues dans les sacs (4) auxquels les dispositifs cibles sont associés.

9. Dispositifs de contrôle-commande suivant la revendication 8, **caractérisé en ce que** le central de télésurveillance (14) est destiné à émettre vers les dispositifs cibles (5) rendus actifs une information relative à l'identité des sacs correspondants (4) en cours de chargement et éventuellement à la valeur de leur contenu.

10. Dispositifs de contrôle-commande suivant l'une des revendications 7 à 9, **caractérisé en ce qu'**il comporte en outre dans les locaux d'au moins une entreprise de gestion ou de transport de fonds, au moins un appareil, de contrôle (11) des valeurs livrées à l'entreprise par un véhicule de transport (6) auxquelles sont associés des dispositifs cibles (5), ledit appareil de contrôle comprenant un émetteur-récepteur (10) de signaux Radio-Fréquence d'activation des dispositifs cibles dans un périmètre de sécurité (P10) prédéterminé défini par l'émetteur de l'émetteur-récepteur (10), lesdits moyens de détection de l'absence de signaux d'activation contenus dans chaque dispositif cible (5) lors de la sortie d'un dispositif cible (5) hors dudit périmètre de sécurité (P10) commandant les moyens d'intervention (30) en vue de la neutralisation et/ou de la destruction des valeurs contenues dans le sac (4) auquel est associé ledit dispositif cible (5).

11. Dispositif de contrôle-commande suivant l'une des revendications 5, 6 et 10, **caractérisé en ce que** ledit appareil de contrôle (1 ; 11) est un appareil fixe ou portable.

12. Dispositif de contrôle-commande suivant la revendication 11, **caractérisé en ce que** ledit appareil de contrôle (1) est formé d'un portique.

13. Dispositif suivant l'une des revendications 5 à 6, **caractérisé en ce que** l'émetteur-récepteur dudit appareil de contrôle (1 ; 11) est associé à des moyens de désactivation des dispositifs cibles (5) lorsque les dispositifs cibles (5) se trouvent à l'intérieur des locaux sécurisés d'une entreprise.

14. Dispositif de contrôle-commande suivant l'une quelconque des revendications précédentes, **caractérisé en ce que** le dispositif (22) de stockage d'une étiquette électronique d'identification du dispositif cible et des valeurs, du document ou de l'objet contient également des données quantitatives et qualitatives concernant les valeurs, le document ou l'objet.

15. Dispositif de contrôle-commande suivant l'une quelconque des revendications précédentes, **caractérisé en ce qu'**il comporte des moyens associés audit émetteur-récepteur pour transmettre au dispositif (22) de stockage d'étiquettes électroniques de chaque dispositif cible en plus des données d'identification du dispositif cible et des valeurs, du document ou de l'objet, des données qualitatives concernant les valeurs, le document ou l'objet.

16. Dispositif de contrôle-commande suivant l'une quelconque des revendications précédentes, **caractérisé en ce que** les données qualitatives sont des montants des valeurs, du document ou de l'objet.

## Claims

1. Monitoring-command device intended for the monitoring, neutralisation, and/or destruction of valuable items, documents, and/or objects, comprising at least one target device (5) intended to be placed in the immediate proximity of valuable items, of at least one document or object to be monitored, neutralised, and/or destroyed, **characterised in that** it comprises at least one transmitter (2, 8, 10) by way of Hertzian signals containing information relating on the one hand to the target device (5) and on the other to the valuable items, to the document or object in the proximity of which it is placed, the target device (5) comprising:
- an antenna (20) for reception of the signals deriving from the said transmitter (2, 8, 10),
- means (26) connected to the said antenna to identify in the signals from the said transmitter the information relating at least to the target device (5) placed in the proximity of the valuable items, the document, and/or the object,
- means (26) for the detection of an anomaly in the said signals and control of means (30) of intervention with a view to signalling an incident in the monitoring of the object or to proceed with the neutralisation and/or destruction of the valuable items or the said at least one document,
- a storage device (22) for an electronic label for identification of the target device (5) and the valuable items, of the document, or of the object in the proximity of which it has been placed, and
- **in that** it further comprises means associated with the said transmitter-receiver (2) for transmitting to the electronic label storage device (22) of each target device (5) identification data for the target device (5) and the valuable items, document, or object with which the target device is associated.

2. Control device according to Claim 1, **characterised in that** the said transmitter (2, 8, 10) has a range defining a predetermined security perimeter (P1, P8, P10) and **in that** the anomaly detection means (26) are means for detecting the departure of the target device (5) outside the security perimeter of the said transmitter (2, 8, 10) due to the absence of reception of the signal from the said transmitter.

3. Monitoring-command device according to Claim 1, **characterised in that** the signals deriving from the said transmitter (2, 8, 10) received by the target device have a predetermined repetition cadence, and the means (26) for anomaly detection further comprise means for the detection of signals received outside the said repetition cadence.

4. Monitoring-command device according to one of Claims 1 to 3, **characterised in that** the said anomaly detection means comprise a micro-programmed system (26) connected to the said antenna (20) by a radio frequency coupler (24).

5. Monitoring-command device according to one of Claims 1 to 4, **characterised in that** it comprises, at the premises of at least one company engaged in the management or transport of funds, a device for the monitoring of bags (4), of valuable items to be transported with which target devices (5) are associated, the said monitoring device comprising a transmitter-receiver (2; 10) for radio frequency signals for activation of the target devices (5) within a predetermined security perimeter (P1; P10) defined by the transmitter of the transmitter-receiver (2; 10) of the said control device and the target devices (5) each comprise means (26) for detecting the absence of activation signals due to departure of the target devices outside the security perimeter (P1; P10) of the device (1; 11) for the monitoring and command of the intervention means (30) with a view to the neutralisation and/or destruction of the valuable items contained in the said bags (4).

6. Monitoring-command device according to Claim 5, **characterised in that** it is connected to a central accounting system (16) or an integrated company management system in order to receive from the said system information relating to the identification of the target devices (5) and to the valuable items contained in the bags with which they are associated.

7. Monitoring-command device according to one of Claims 1 to 6, **characterised in that** it comprises in addition at least one vehicle (6) for the transport of funds intended to receive the bags (4) of valuable items to be transported, to which are associated target devices (5), the said vehicle (6) comprising a transmitter-receiver (8) of radio frequency signals for the activation of the target devices (5) inside a predetermined security perimeter (P8) defined by the transmitter-receiver (8) of the said vehicle, the means (26) for detecting the absence of the signals for activation and command of the intervention means (30) of each of the target devices (5) reacting to the departure of the target devices outside the security perimeter (P8) of the vehicle (6) to command the intervention means (30) for the neutralisation and/or destruction of the valuable items contained in the said bags.

8. Monitoring-command device according to Claim 7, **characterised in that** the transmitter-receiver (8) of the said at least one vehicle is connected to a remote surveillance central unit (14) provided with a transmitter-receiver intended to receive alarm signals deriving from the vehicle (6) in the event of attack and to issue, in response to the alarm signals, activating signals to the target devices (5) located in the vehicle (6) outside the repetition cadence of the activation signals of the target devices (5) in order to allow the means (26) for the detection of anomalies to issue commands to the said intervention means (30) with a view to the neutralisation and/or destruction of the valuable items contained in the bags (4) with which the target devices are associated.

9. Monitoring-command device according to Claim 8, **characterised in that** the central remote surveillance unit (14) is designed to transmit to the target devices (5), rendered active, information relating to the identity of the corresponding bags (4) in the course of loading, and possibly the value of their contents.

10. Monitoring-command devices according to one of Claims 7 to 9, **characterised in that** they further comprise, at the premises of at least one company engaged in the management or transport of funds, at least one device (11) for monitoring the valuable items delivered to the company by a transport vehicle (6) with which are associated target devices (5), the said monitoring device comprising a transmitter-receiver (10) for radio-frequency signals for activation of the target devices within a predetermined security parameter (P10) defined by the transmitter of the transmitter-receiver (10), the said means of detection of the absence of activation signals contained in each target device (5) after the departure of a target device (5) outside the said security perimeter (P10) commanding the intervention means (30) with a view to the neutralisation and/or destruction of the valuable items contained in the bag (4) with which the said target device (5) is associated.

11. Monitoring-command device according to one of Claims 5, 6 and 10, **characterised in that** the said monitoring device (1; 11) is a fixed or portable device.

12. Monitoring-command device according to Claim 11, **characterised in that** the said monitoring device (1) is formed from a gantry.

13. Monitoring-command device according to one of Claims 5 to 6, **characterised in that** the transmitter-receiver of the said monitoring device (1; 11) is associated with means of deactivation of the target devices (5) when the target devices (5) are located inside the secure premises of a company.

14. Monitoring-command device according to any one of the foregoing claims, **characterised in that** the device (22) for storage of an electronic label for the identification of the target device and valuable items, and of the document or the object likewise contains quantitative and qualitative data concerning the valuable items, the document, or the object.

15. Monitoring-command device according to any one of the foregoing claims, **characterised in that** it comprises means associated with the said transmitter-receiver to transmit to the device (22) for storage of electronic labels for each target device, in addition to data for the identification of the target device and the valuable items, of the document, or the object, qualitative data concerning the valuable items, the document or the object.

16. Monitoring-command device according to any one of the foregoing claims, **characterised in that** the qualitative data are the amounts of the valuable items, of the document, or the object.

## Patentansprüche

1. Kontroll- und Steuervorrichtung zur Überwachung, zur Neutralisierung und/oder zur Vernichtung von Werten, Dokumenten und/oder Gegenständen, umfassend mindestens eine Zielvorrichtung (5), die dazu bestimmt ist, in unmittelbarer Nähe von Werten, mindestens eines Dokuments oder Gegenstands, die zu überwachen, zu neutralisieren und/oder zu vernichten sind, angeordnet zu werden, **dadurch gekennzeichnet, dass** sie mindestens einen Funksender (2, 8, 10) von Signalen umfasst, die einerseits die Zielvorrichtung (5) und andererseits die Werte, das Dokument oder den Gegenstand betreffen, in deren Nähe sie angeordnet ist, wobei die Zielvorrichtung (5) umfasst:
- eine Antenne (20) zum Empfangen der von dem Sender (2, 8, 10) kommenden Signale,
- Mittel (26), die mit der Antenne verbunden sind, um in den Signalen des Senders die Informationen zu erkennen, die mindestens die in Nähe der Werte, des Dokuments und/oder des Gegenstandes angeordnete Zielvorrichtung (5) betreffen,
- Mittel (26) zur Erfassung einer Anomalie in den Signalen und zur Steuerung von Eingriffsmitteln (30), um eine Störung in der Überwachung des Gegenstands anzuzeigen oder die Neutralisierung und/oder Vernichtung der Werte oder des mindestens einen Dokuments vorzunehmen,
- eine Vorrichtung (22) zur Speicherung eines elektronischen Etiketts zur Identifizierung der Zielvorrichtung (5) und der Werte, des Dokuments oder des Gegenstands, in deren Nähe sie angeordnet ist, und
- dass sie außerdem dem Sende- und Empfangsgerät (2) zugeordnete Mittel umfasst, um zur Vorrichtung (22) zur Speicherung eines elektronischen Etiketts jeder Zielvorrichtung (5) Identifizierungsdaten der Zielvorrichtung (5) und der Werte, des Dokuments oder des Gegenstands, denen die Zielvorrichtung zugeordnet ist, zu übertragen.

2. Kontrollvorrichtung nach Anspruch 1, **dadurch gekennzeichnet, dass** der Sender (2, 8, 10) eine Reichweite hat, die einen vorbestimmten Sicherheitsbereich (P1, P8, P10) definiert, und die Mittel (26) zur Erfassung von Anomalien Mittel zum Erfassen des Austreten der Zielvorrichtung (5) aus dem Sicherheitsbereich des Senders (2, 8, 10) durch Fehlen eines Empfangs des Signals des Senders sind.

3. Kontroll- und Steuervorrichtung nach Anspruch 1, **dadurch gekennzeichnet, dass** die von der Zielvorrichtung empfangenen von dem Sender (2, 8, 10) kommenden Signale einen vorbestimmten Wiederholungstakt haben und die Mittel (26) zum Erfassen von Anomalien außerdem Mittel zum Erfassen von außerhalb dieses Wiederholungstakts empfangenen Signalen umfassen.

4. Kontroll- und Steuervorrichtung nach einem der Ansprüche 1 bis 3, **dadurch gekennzeichnet, dass** die Mittel zum Erfassen von Anomalien ein mikroprogrammiertes System (26) umfassen, das mit der Antenne (20) durch einen Funkfrequenzkoppler (24) verbunden ist.

5. Kontroll- und Steuervorrichtung nach einem der Ansprüche 1 bis 4, **dadurch gekennzeichnet, dass** sie in den Räumen mindestens eines Geldverwaltung- und -transportunternehmens eine Vorrichtung zur Überwachung von Säcken (4) von zu befördernden Werten umfasst, denen Zielvorrichtungen (5) zugeordnet sind, wobei diese Kontrollvorrichtung ein Sende- und Empfangsgerät (2; 10) von Funkfrequenzsignalen zur Aktivierung der Zielvorrichtungen (5) in einem ersten vorbestimmten Sicherheitsbereich (P1; P10) umfassen, der durch den Sender des Sende- und Empfangsgeräts (2; 10) der Kontrollvorrichtung definiert wird, und die Zielvorrichtungen (5) jeweils Mittel (26) zum Erfassen des Fehlens der Aktivierungssignale infolge des Austretens der Zielvorrichtungen aus dem Sicherheitsbereich (P1; P10) der Vorrichtung (1; 11) zur Kontrolle und Steuerung der Eingriffsmittel (30) zum Zweck der Neutralisierung und/oder der Vernichtung der in den Säcken (4) enthaltenen Werte umfassen.

6. Kontroll- und Steuervorrichtung nach Anspruch 5, **dadurch gekennzeichnet, dass** sie mit einem zentralen Buchungssystem (16) oder einem System zur integrierten Unternehmensverwaltung verbunden ist, um von diesem System Informationen über die Identifizierung der Zielvorrichtungen (5) und über die Werte zu empfangen, die in den Säcken, denen diese zugeordnet sind, enthalten sind.

7. Kontroll- und Steuervorrichtung nach einem der Ansprüche 1 bis 6, **dadurch gekennzeichnet, dass** sie außerdem mindestens ein Geldtransportfahrzeug (6) umfasst, das dazu bestimmt ist, die Säcke (4) mit den zu transportierenden Werten, denen Zielvorrichtungen (5) zugeordnet sind, aufzunehmen, wobei das Fahrzeug (6) ein Funkfrequenz-Sende- und Empfangsgerät (8) zur Aktivierung der Zielvorrichtungen (5) in einem vorbestimmten Sicherheitsbereich (P8) umfasst, der durch das Sende- und Empfangsgerät (8) des Fahrzeugs definiert ist, wobei die Mittel (26) zum Erfassen des Fehlens der Signale zur Aktivierung und Steuerung der Eingriffsmittel (30) jeder der Zielvorrichtungen (5) bei Austreten der Zielvorrichtungen aus dem Sicherheitsbereich (P8) des Fahrzeugs (6) reagieren, um die Eingriffsmittel (30) für die Neutralisierung und/oder Vernichtung der in den Säcken enthaltenen Werte zu steuern.

8. Kontroll- und Steuervorrichtung nach Anspruch 7, **dadurch gekennzeichnet, dass** das Sende- und Empfangsgerät (8) dieses mindestens einen Fahrzeugs mit einer Fernüberwachungszentrale (14) in Verbindung ist, die mit einem Sende- und Empfangsgerät ausgerüstet ist, das dazu bestimmt ist, Alarmsignale zu empfangen, die im Angriffsfall von dem Fahrzeug (6) kommen, und als Antwort auf diese Alarmsignale zu den in dem Fahrzeug (6) befindlichen Zielvorrichtungen (5) Betätigungssignale außerhalb des Wiederholungstakts der Signale zur Aktivierung der Zielvorrichtungen (5) zu senden, um den Mitteln (26) zur Erfassung von Anomalien zu gestatten, die Eingriffsmittel (30) zum Zweck der Neutralisierung und/oder der Vernichtung der Werte zu steuern, die in den Säcken, denen die Zielvorrichtungen zugeordnet sind, enthalten sind.

9. Kontroll- und Steuervorrichtung nach Anspruch 8, **dadurch gekennzeichnet, dass** die Fernüberwachungszentrale (14) dazu bestimmt ist, zu den aktiv gemachten Zielvorrichtungen (5) eine Information über die Identität der entsprechenden, in Ladung begriffenen Säcke (4) und ggf. über den Wert ihres Inhalts zu senden.

10. Kontroll- und Steuervorrichtung nach einem der Ansprüche 7 bis 9, **dadurch gekennzeichnet, dass** sie außerdem in den Räumen mindestens eines Geldverwaltungs- oder -transportunternehmens mindestens ein Gerät (11) zur Kontrolle der Werte umfasst, die dem Unternehmen durch ein Transportfahrzeug (6) geliefert werden und denen Zielvorrichtungen (5) zugeordnet sind, wobei das Kontrollgerät ein Sende- und Empfangsgerät für Funkfrequenzsignale zur Aktivierung der Zielvorrichtungen in einem ersten vorbestimmten, durch den Sender des Sende- und Empfangsgeräts (10) definierten Sicherheitsbereich (P10) umfasst, wobei die Mittel zum Erfassen des Fehlens von Aktivierungssignalen, die in jeder Zielvorrichtung enthalten sind, bei Austreten einer Zielvorrichtung (5) aus diesem Sicherheitsbereich (P10) die Eingriffsmittel (30) zum Zweck der Neutralisierung und/oder der Vernichtung der Werte steuern, die in dem Sack (4) enthalten sind, dem die Zielvorrichtung (5) zugeordnet ist.

11. Kontroll- und Steuervorrichtung nach einem der Ansprüche 5, 6 und 10, **dadurch gekennzeichnet, dass** die Kontrollvorrichtung (1; 11) eine feststehende oder tragbare Vorrichtung ist.

12. Kontroll- und Steuervorrichtung nach Anspruch 11, **dadurch gekennzeichnet, dass** die Kontrollvorrichtung (1) von einem Portalrahmen gebildet ist.

13. Kontroll- und Steuervorrichtung nach einem der Ansprüche 5 bis 6, **dadurch gekennzeichnet, dass** das Sende- und Empfangsgerät der Kontrollvorrichtung (1; 11) Mitteln zur Deaktivierung der Zielvorrichtungen (5), wenn die Zielvorrichtungen (5) sich im Inneren der gesicherten Räume eines Unternehmens befinden, zugeordnet ist.

14. Kontroll- und Steuervorrichtung nach einem der vorhergehenden Ansprüche, **dadurch gekennzeichnet, dass** die Vorrichtung (22) zur Speicherung eines elektronischen Etiketts zur Identifizierung der Zielvorrichtung und der Werte, des Dokuments oder des Gegenstands auch quantitative und qualitative Daten enthält, die die Werte, das Dokument oder den Gegenstand betreffen.

15. Kontroll- und Steuervorrichtung nach einem der vorhergehenden Ansprüche, **dadurch gekennzeichnet, dass** sie dem Sende- und Empfangsgerät zugeordnete Mittel umfasst, um zur Vorrichtung (22) zur Speicherung von elektronischen Etiketten jeder Zielvorrichtung zusätzlich zu den Daten zur Identifizierung der Zielvorrichtung und der Werte, des Dokuments oder des Gegenstands qualitative Daten zu übertragen, die die Werte, das Dokument oder den Gegenstand betreffen.

16. Kontroll- und Steuervorrichtung nach einem der vorhergehenden Ansprüche, **dadurch gekennzeichnet, dass** die qualitativen Daten Beträge der Werte, des Dokuments oder des Gegenstands sind.
